(19) Europäisches Patentamt
European Patent Office
Office européen des brevets

(11) **EP 4 487 295 B1**

(12) **EUROPEAN PATENT SPECIFICATION**

(45) Date of publication and mention
of the grant of the patent:
**15.10.2025 Bulletin 2025/42**

(21) Application number: **23706758.2**

(22) Date of filing: **22.02.2023**

(51) International Patent Classification (IPC):
**G06T 7/20** *(2017.01)*

(52) Cooperative Patent Classification (CPC):
**G06T 7/20;** G06T 2207/30261

(86) International application number:
**PCT/EP2023/054377**

(87) International publication number:
**WO 2023/165859 (07.09.2023 Gazette 2023/36)**

(54) **COMPUTER-IMPLEMENTED METHOD FOR TRACKING AN OBJECT, DEVICE FOR TRACKING AN OBJECT, AND SYSTEM FOR TRACKING AN OBJECT**

COMPUTERIMPLEMENTIERTES VERFAHREN ZUR VERFOLGUNG EINES OBJEKTS, VORRICHTUNG ZUR VERFOLGUNG EINES OBJEKTS UND SYSTEM ZUR VERFOLGUNG EINES OBJEKTS

PROCÉDÉ MIS EN OEUVRE PAR ORDINATEUR PERMETTANT DE SUIVRE UN OBJET, DISPOSITIF PERMETTANT DE SUIVRE UN OBJET, ET SYSTÈME PERMETTANT DE SUIVRE UN OBJET

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **02.03.2022 GB 202202846**

(43) Date of publication of application:
**08.01.2025 Bulletin 2025/02**

(73) Proprietor: **AUMOVIO Autonomous Mobility Germany GmbH**
**85057 Ingolstadt (DE)**

(72) Inventors:
• **PASUPATHY, Anuradha**
**Bangalore 560100 (IN)**
• **MUKHOPADHYAY, Shilpa**
**Bangalore 560099 (IN)**
• **KULKARNI, Milind**
**Bangalore 560099 (IN)**

(74) Representative: **Aumovio Corporation**
**Continental Automotive**
**Technologies GmbH**
**Putzbrunner Straße 69**
**81739 München (DE)**

(56) References cited:
• **KANEKO SOUTARO ET AL: "A vehicle image tracking method robust to size reduction and partial color change", 2018 INTERNATIONAL WORKSHOP ON ADVANCED IMAGE TECHNOLOGY (IWAIT), IEEE, 7 January 2018 (2018-01-07), pages 1 - 4, XP033352477, DOI: 10.1109/IWAIT.2018.8369670**
• **KAI LI ET AL: "Variable scale and anti-occlusion object tracking method with multiple feature integration", 2016 7TH IEEE INTERNATIONAL CONFERENCE ON SOFTWARE ENGINEERING AND SERVICE SCIENCE (ICSESS), IEEE, 26 August 2016 (2016-08-26), pages 426 - 433, XP033079909, DOI: 10.1109/ ICSESS.2016.7883101**

**Description**

TECHNICAL FIELD

Various embodiments relate to computer-implemented method for tracking an object, device for tracking an object, and system for tracking an object.

BACKGROUND

It is useful for vehicles to track targets, such as a vehicle ahead, to avoid collisions. Vehicles typically detect the target and track it by applying image recognition techniques on images captured by cameras mounted on the vehicles. However, the vehicle may lose track of the target when the target comes into close proximity to the cameras. When the target is close to the cameras, the image of the target may become out of focus, or the target may be only partially captured in the image. This renders conventional image recognition techniques ineffective in recognizing the target and as such, affects the ability of the vehicle to track the target.

In view of the above, there is a need for a solution to address the challenges of tracking a target at close range.

A method for tracking vehicles preceding a vehicle on which a forward facing camera is mounted is known from the paper "A vehicle image tracking method robust to size reduction and partial color change" by Kaneko and Nakayama published in the proceedings of the 2018 INTERNATIONAL WORKSHOP ON ADVANCED IMAGE TECHNOLOGY (IWAIT), January 7-9, 2018, Chiang Mai, Thailand. The method is robust to size reduction and partial color changes.

SUMMARY

According to various embodiments, there is provided a computer-implemented method for tracking an object. The method includes receiving a real-time video feed. The method further includes: for each frame of the video feed, determining a probability of existence of the object in the frame, determining whether a probability of existence of the object in the frame falls below a probability threshold, determining whether the object fulfils a set of close-range criteria based on determining that the probability of existence is lower than the probability threshold, and generating a adjusted probability of existence based on the determination of whether the object fulfils the set of close-range criteria.

According to various embodiments, there is provided a non-transitory computer-readable storage medium comprising instructions, which when executed by a processor, performs the abovementioned computer-implemented method.

According to various embodiments, there is provided a device for tracking an object. The device includes the abovementioned non-transitory computer-readable storage medium, and at least one processor. The at least one processor may be coupled to the non-transitory computer-readable storage medium, and may be configured to carry out the abovementioned computer-implemented method.

According to various embodiments, there is provided a system for tracking an object. The system includes the abovementioned device and a camera configured to capture the video feed.

Additional features for advantageous embodiments are provided in the dependent claims.

BRIEF DESCRIPTION OF THE DRAWINGS

In the drawings, like reference characters generally refer to the same parts throughout the different views. The drawings are not necessarily to scale, emphasis instead generally being placed upon illustrating the principles of the invention. In the following description, various embodiments are described with reference to the following drawings, in which:

FIG. 1 shows a conceptual diagram of a tracking device according to various embodiments.
FIG. 2 shows a conceptual diagram of a system for tracking an object, according to various embodiments.
FIG. 3 shows a conceptual diagram of the storage medium according to various embodiments.
FIGS. 4A and 4B show examples of images being processed to track a target, according to various embodiments.
FIG. 5 shows a flow diagram of a computer-implemented method for tracking an object, according to various embodiments.
FIGS. 6A and 6B collectively show a flow chart of a method for tracking an object, according to various embodiments.

DESCRIPTION

Embodiments described below in context of the devices are analogously valid for the respective methods, and vice versa. Furthermore, it will be understood that the embodiments described below may be combined, for example, a part of one embodiment may be combined with a part of another embodiment.

It will be understood that any property described herein for a specific device may also hold for any device described herein. It will be understood that any property described herein for a specific method may also hold for any method described herein. Furthermore, it will be understood that for any device or method described herein, not necessarily all the components or steps described must be enclosed in the device or method, but only some (but not all) components or steps may be enclosed.

The term "coupled" (or "connected") herein may be understood as electrically coupled or as mechanically coupled, for example attached or fixed, or just in contact without any fixation, and it will be understood that both direct coupling or indirect coupling (in other words: coupling without direct contact) may be provided.

In this context, the device as described in this description may include a memory which is for example used in the processing carried out in the device. A memory used in the embodiments may be a volatile memory, for example a DRAM (Dynamic Random Access Memory) or a non-volatile memory, for example a PROM (Programmable Read Only Memory), an EPROM (Erasable PROM), EEPROM (Electrically Erasable PROM), or a flash memory, e.g., a floating gate memory, a charge trapping memory, an MRAM (Magnetoresistive Random Access Memory) or a PCRAM (Phase Change Random Access Memory). The memory may include a non-transitory storage medium.

The term "object" being tracked may also be interchangeably referred herein as "target".

In order that the invention may be readily understood and put into practical effect, various embodiments will now be described by way of examples and not limitations, and with reference to the figures.

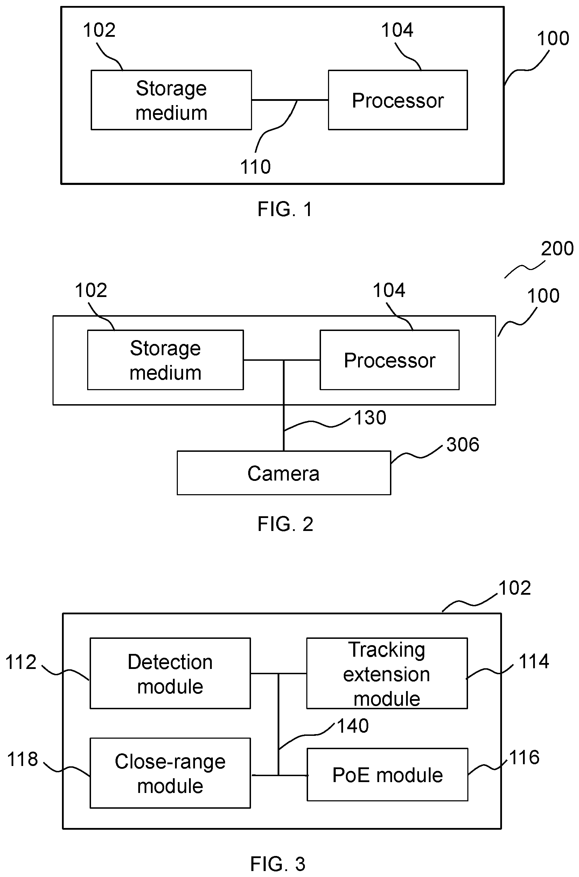

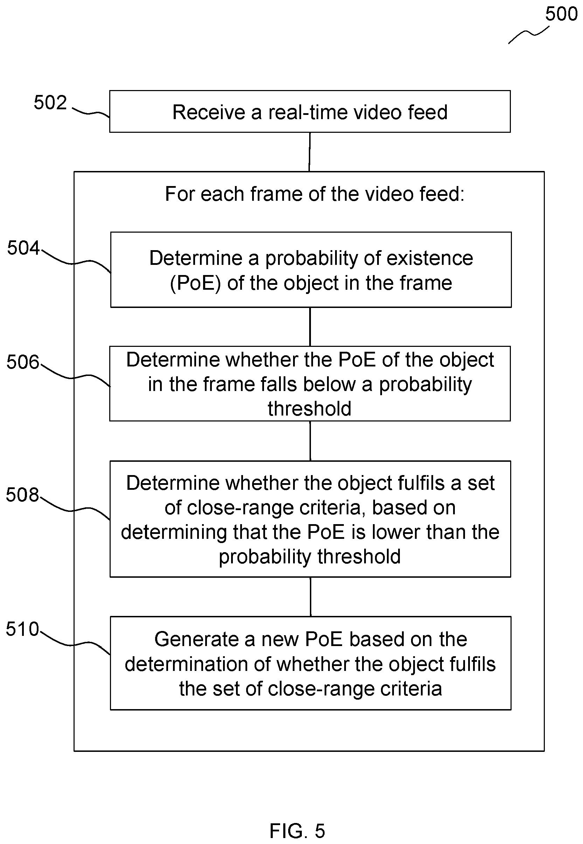

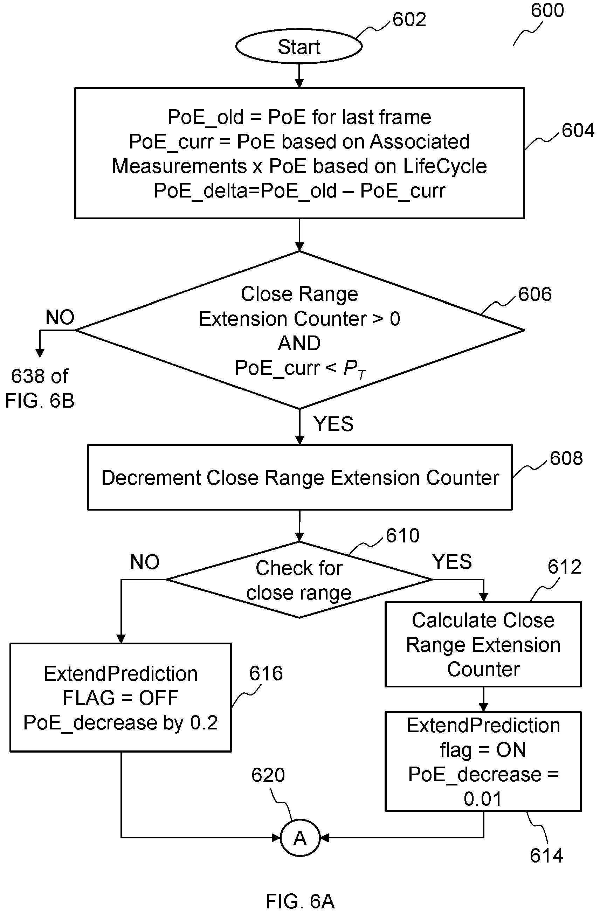

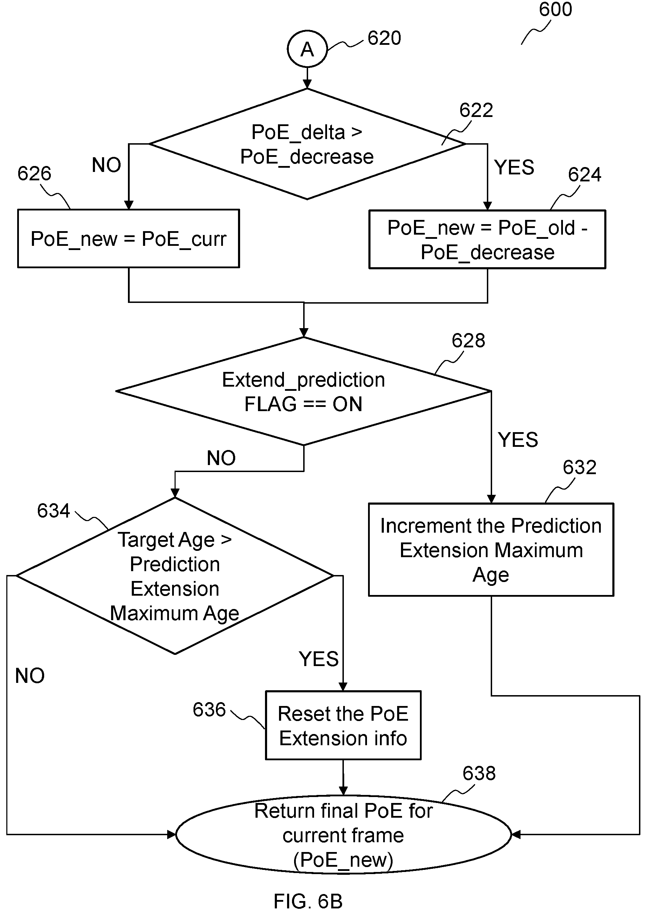

FIG. 1 shows a conceptual diagram of a tracking device 100 according to various embodiments. The tracking device 100 may also be referred herein as a device for tracking an object. The tracking device 100 may include a storage medium 102 and a processor 104. The tracking device 100 may include further processors 104. The storage medium 102 may be a non-transitory computer readable storage medium. The storage medium 102 may include at least one memory. The storage medium 102 and the processor 104 may be coupled to one another, for example electrically and/or communicatively, by coupling lines 110. The processor 104 may be configured to carry out a method for tracking an object, which will be described with respect to FIG. 5 and FIGS. 6A and 6B.

FIG. 2 shows a conceptual diagram of a system 200 for tracking an object, according to various embodiments. The system 200 may include the device 100. The system 200 may further include a camera 306 configured to capture images. The camera 306 may be configured to capture a video feed that includes a sequence of images. The device 100 and the camera 306 may be coupled to one another, for example electrically and/or communicatively, by coupling lines 130.

According to various embodiments, the device 100 may be provided on a vehicle, herein referred to as the ego vehicle. In an alternative embodiment, the device 100 may be provided separate from the ego vehicle, for example, on a remote server or cloud server.

According to various embodiments, the system 200 may be provided at least partially on the ego vehicle.

FIG. 3 shows a conceptual diagram of the storage medium 102 according to various embodiments. The storage medium 102 may include a detection module 112, a tracking extension module 114, a probability of existence (PoE) module 116 and a close-range module 118. At least one of the detection module 112, the tracking extension module 114, the PoE module 116 and the close-range module 118 may be computer algorithms stored on the storage medium 102 that may be run by the processor 104. In an alternative embodiment, at least one of the detection module 112, the tracking extension module 114, the PoE module 116 and the close-range module 118 may be stored on a separate storage medium 102. The detection module 112 may be configured to detect and classify a target in an image taken by a camera, for example the camera 306, based on image processing and recognition techniques. The PoE module 116 may be configured to determine PoE of the target, based on output from the detection module 112. The PoE module 116 may also determine the PoE further based on other information, such as age of the target, and inputs from other sensors on the ego vehicle. The PoE indicates the measure of certainty, i.e. probability, for the target's existence. The close-range module 118 may be configured to determine whether the target is within a predefined distance from the ego vehicle. The tracking extension module 114 may be configured to modify the PoE determined by the PoE module 116, based at least in part on output of the close-range module 118. The tracking extension module 114 may extend a time duration during which the target is tracked by the tracking device 100, based at least partially on determining that the target is in close range of the camera. The detection module 112, the tracking extension module 114, the PoE module 116 and the close-range module 118 may be coupled to one another, for example electrically and/or communicatively, by coupling lines 140.

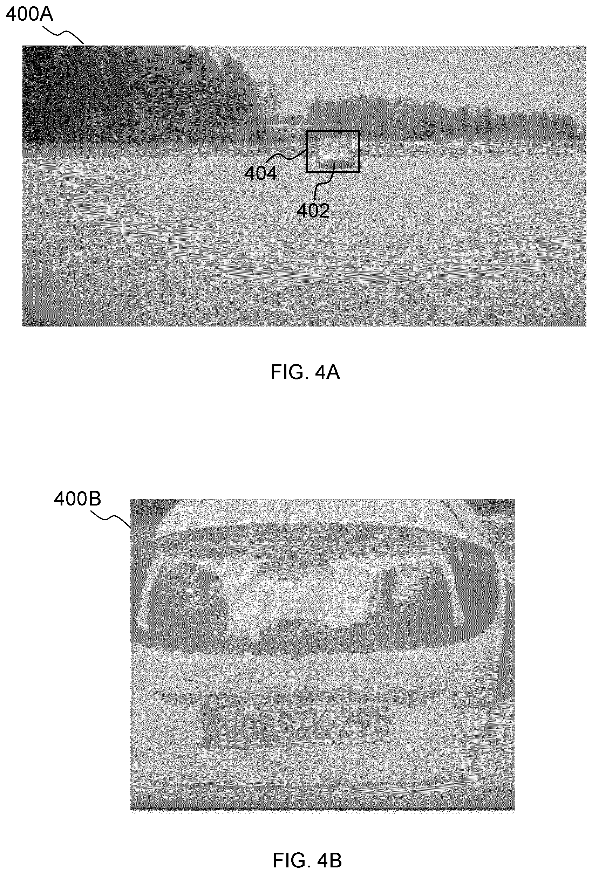

FIGS. 4A and 4B show examples of images being processed to track a target 402, according to various embodiments. The images may be captured by a camera, such as the camera 306, onboard the ego vehicle. The tracking device 100 may receive these images from the camera 306 and may detect the target 402 based on these received images. For example, the detection module 112 of the tracking device 100 may identify features of the target 402 in the images, and thereby recognize the target 402 based on the identified features. These features may include for example, the outline of the target 402, characteristic shapes and color of parts of the target 402.

Referring to FIG. 4A, when the target 402 is far away from the ego vehicle, the camera 306 may capture an image 400A that includes the entire outline of the target 402. In this example, the target 402 is more than 10 metres away from the ego vehicle. The detection module 112 may recognize the overall shape of the target 402, and thereby generate a bounding box 404 that surrounds the target 402 in the image 400A. The PoE module 116 may output a high PoE based on the detection results, as the detection module 112 may indicate a high confidence of detecting the target 402.

Referring to FIG. 4B, when the target 402 is near to the ego vehicle, part of the target 402 may be outside of the field of view of the camera 306. In this example, the target 402 is less than 10 metres away from the ego vehicle. When the ego vehicle and the target 402 move relative to one another, such that the distance between them shortens, the features of the target 402 become enlarged in the camera images, like shown in the image 400B. The overall shape of the target 402 cannot be seen in the image 400B. As a result, the detection module 112 may not be able to detect and/or recognize the target 402. Consequently, the PoE module 116 may output a low PoE based on the detection results, as the detection module 112 may indicate a low confidence of detecting the target 402. As the target 402 moves even closer to the ego vehicle, it may become increasingly difficult for the detection module 112 to detect the target 402, and as such, the PoE module 116 may further decrease its determined PoE. If the PoE module 116 continues to reduce its determined PoE until the PoE reaches a minimum threshold, the tracking device 100 may cease to track the target 402. This may be a dangerous outcome as the target 402 is not only present, but also in close-range to the ego vehicle and therefore poses a collision threat to the ego vehicle. To overcome this problem, the tracking device 100 may include the close-range module 118 and the tracking extension module 114. The close-range module 118 may determine that the target 402 is within a predefined close range of the ego vehicle, based on a plurality of close-range conditions. These close-range conditions will be described with respect to 610 of FIG. 6A. The tracking extension module 114 may modify, or override, the output PoE of the detection module 112 when the close-range module 118 determines that the target 402 is in close-range, in order to continue tracking the target 402. The tracking extension module 114 may assist the tracking device 100 to track the target 402 for a longer duration of time, by adjusting the PoE value of the target even when there is no detection available for a plurality of frames of the video feed.

FIG. 5 shows a flow diagram of a computer-implemented method 500 for tracking an object, according to various embodiments. The object being tracked may also be referred herein as the target. The method 500 may address the missing detections in close range by tracking them further even when the detection module 112 fails to detect or recognize the target. The method 500 may include determining whether the target is within a close range of the ego vehicle, and then overriding the detection module's lack of detection if the target is determined to be within close range of the ego vehicle for an extend-prediction time limit.

The method 500 may include receiving a real-time video feed, in 502. The method 500 may further include determining the PoE of the object in each frame of the video feed, in 504. The PoE indicates a confidence level that the object exists, and may be determined by the detection module 112. The detection module 112 may receive the video feed as an input and may generate a detection as an output. The PoE module 118 may receive the detection form the detection module 112 and may generate the PoE as an output. The method 500 may further include determining whether the PoE of the object in the frame falls below a probability threshold ($P_T$), in 506. The method 500 may further include determining whether the object fulfils a set of close-range criteria, based on determining that the PoE is lower than the $P_T$, in 508. The method 500 may further include generating an adjusted PoE based on the determination of whether the object fulfils the set of close-range criteria, in 510. Each of 504, 506, 508, 510 may be performed for each frame of the video feed, and may be performed by the tracking extension module 114.

The method 500 may continuously track the object based on the current scenario (as captured by the current frame of the video feed), instead of relying only on predicted future positions. This improves the accuracy of the tracking. Also, the computational expense in terms of resource and time are less since this algorithm involves simple arithmetic operations and may be effective in tracking object at a very close range. The method 500 may be capable of tracking the target even when it is 3 to 6 metres away, or even closer, from the ego vehicle. The method 500 may does not depend solely on specific features of the target, and hence may not be limited to tracking a specific type of object. The method 500 may further determine the probability of existence of the object based on at least one of vehicle dynamics, camera, environmental parameters etc. The method 500 addresses the challenges faced in close-range tracking, which may aid in preventing collisions.

According to an embodiment which may be combined with the above-described embodiment or with any below described further embodiment, generating the adjusted PoE may be further based on a difference between the adjusted probability of the object in a preceding frame and the PoE of the object in the frame. In other words, the adjusted PoE may be generated at least partly based on change in the PoE from the previous time instance. For example, a sharp decrease in the PoE may indicate an error in the detection that may require intervention from the tracking extension module 114.

According to an embodiment which may be combined with the above-described embodiment or with any below described further embodiment, the method 500 may further include: determining a probability decremental value based on the determination of whether the object fulfils the set of close-range criteria. This allows the PoE to be adjusted appropriately, depending on whether the object is within close range of the ego vehicle.

According to an embodiment which may be combined with the above-described embodiment or with any below described further embodiment, determining the probability decremental value includes assigning a first value to the probability decremental value based on determining that the object fulfils the set of close-range criteria, and further includes assigning a second value to the probability decremental value based on determining that the object does not fulfil the set of close-range criteria, wherein the first value is smaller than the second value. In other words, the tracking extension module 114 may decrease the PoE to a smaller extent, if the close-range module 118 determines that the object is within close-range.

According to an embodiment which may be combined with the above-described embodiment or with any below described further embodiment, the method 500 may further include: determining whether a difference between the adjusted PoE of the object in a preceding frame and the PoE of the object in the frame exceeds the probability decremental value.

According to an embodiment which may be combined with the above-described embodiment or with any below described further embodiment, generating the adjusted PoE includes deducting the probability decremental value from the adjusted probability of the preceding frame, based on determining that the difference exceeds the probability decremental value.

According to an embodiment which may be combined with the above-described embodiment or with any below described further embodiment, generating the adjusted PoE includes setting the PoE of the object in the frame as the adjusted PoE, based on determining that the difference does not exceed the probability decremental value.

According to an embodiment which may be combined with the above-described embodiment or with any below described further embodiment, the method 500 may further include: turning on an extend-prediction flag, based on determining that the object fulfils the set of close-range criteria; and incrementing an extend-prediction time limit. In other words, when the close-range module 118 determines that the object in close range, the tracking extension module 114 may switch the tracking process to an extend-prediction mode where the tracking extension module 114 may override the PoE computed by the PoE module 116. The tracking extension module 114 may also extend the time window for operating in the extend-prediction mode.

According to an embodiment which may be combined with the above-described embodiment or with any below described further embodiment, the method 500 may further include: determining whether an age of the object in the video feed exceeds the extend-prediction time limit; and resetting the extend-prediction time limit based on determining that the age of the object in the video feed exceeds the extend-prediction time limit.

According to an embodiment which may be combined with the above-described embodiment or with any below described further embodiment, the method 500 may further include: setting a close-range extension counter based on a time-to-collision between the object and the vehicle, based on determining that the object fulfils the set of close-range criteria.

According to an embodiment which may be combined with the above-described embodiment or with any below described further embodiment, the method 500 may further include: decrementing the close-range extension counter, based on determining that the PoE is lower than the probability threshold.

According to an embodiment which may be combined with the above-described embodiment or with any below described further embodiment, the method 500 may further include: determining whether the object fulfils the set of close-range criteria, further based on determining that the close-range extension counter of a preceding frame is more than zero.

According to an embodiment which may be combined with the above-described embodiment or with any below described further embodiment, the method 500 may further include: determining a time-to-collision between the vehicle and the object based on relative velocity between the object and the vehicle, and distance between the object and the vehicle.

FIGS. 6A and 6B collectively show a flow chart of a method 600 for tracking an object, according to various embodiments. The method 600 shown in FIGS. 6A and 6B may include, or may be part of, the method 500.

Referring to FIG. 6A, the method 600 may include starting the method, in 602. The method 600 may be carried out by the processor 104 running at least one of the detection model 112, the tracking extension module 114, the close-range module 118 and the PoE module 116 stored on the storage medium 102. The method 600 may include defining, in 604, the values of (i) PoE of the preceding frame, denoted as "PoE_old", (ii) PoE of the present frame, as computed by the PoE module 116, denoted as "PoE_curr" (iii) a difference between the PoE_old and PoE_current, denoted as "PoE_delta". PoE_old may be updated with the value of the final adjusted PoE of the immediately preceding frame. PoE_curr may be computed by the PoE module 116 at least partially based on outputs of the detection module 112. PoE_curr may be computed based on associated measurements generated by the detection module 112, in other words, based on whether the detection module 112 is able to detect the object from the current frame. PoE_curr may be computed further based on the life cycle of the object detection, in other words, based on how long the object has been detected since the first frame of the video feed. The life cycle of the object detection may be a time duration of intermittent detection, or may be a time duration of continuous detection.

The method 600 may further include determining whether a close-range extension counter for the target is greater than zero, and whether PoE_curr is less than a probability threshold denoted as $P_T$, in 606. The close-range extension counter is a counter that keeps track of the number of frames for which the PoE needs to be adjusted, when the target is in close range of the ego vehicle.

If the close-range extension counter is zero, and/or PoE_curr is equal to or more than $P_T$ are not met, then the method proceeds to output the final PoE of the current frame, in 638 (shown in FIG. 6B). In other words, the PoE generated by the PoE module 116 is not adjusted, and the extension-prediction mode may be terminated.

If the close-range extension counter is greater than zero, and PoE_curr is less than $P_T$, the close-range extension counter may be decremented, for example, by one count, in 608.

After decrementing the close-range extension counter in 608, close-range checking is performed in 610. The close-range module 114 may determine if the object being tracked is within a predefined close-range distance from the ego vehicle. Checking whether the object is within the predefined close-range distance may involve determining whether the following conditions are satisfied:

(a) velocity of the object in a first direction is less than a first speed limit;
(b) velocity of the object in a second direction is less than a second speed limit;
(c) relative velocity between the ego vehicle and the object is less than a third speed limit;
(d) decrease in PoE of the PoE module 116 between consecutive frames is greater than a decrease threshold;
(e) object size in the image is large;
(f) distance of the object from the ego vehicle is less than the predefined close-range distance;
(g) classification of the object is an identified known class;
(h) ego vehicle's velocity in the first direction is under a fourth limit; and
(i) the ego vehicle's speed is more than a minimum threshold to ensure that the ego vehicle is moving.

For (a) and (b), the first direction may be orthogonal to the second direction. In (d), the decrease threshold may be, for example, about 0.19. A large fall in the PoE generated by the PoE module 116 between successive frames may indicate that there is a lack of detection from the detection module 112. For (e), the object size may be determined by the number pixels occupied by the object in the image. For at least one of (a), (b), (c) and (f), the velocities and/or distance may be obtained from another sensor, for example, a radar sensor or a Lidar sensor.

If at least a predefined quantity of the above conditions is satisfied, or if all of the above conditions are satisfied, the close-range module 118 may determine that the object is in close range. In 610, the close-range module 118 may also continue to monitor the outputs of the detection module 112. If the detection module 112 is able to detect the object, the close-range module 118 may set the close-range condition as false and reset the close-range extension counter to zero. Otherwise, the close-range module 118 sets the close-range condition as true, and the tracking extension module 114 calculates the close-range extension counter, in 612. The tracking extension module 114 may calculate the close-range extension counter based on the estimated time of collision between the ego vehicle and the target. The tracking extension module 114 may estimate the time of collision between the ego vehicle and the target based on the distance between the ego vehicle and the target, like determined in (f) and their relative velocity, like determined in (c).

The close-range extension counter may define the number of frames to extend, for tracking the object in close-range. As an example, if the relative velocity between the ego vehicle and the object is less than a velocity threshold, the close-range extension counter may be set to be a predefined number such as 30. If the close-range extension counter exceeds the predefined number, the tracking extension module 114 may assume that the number of frames to be tracked cannot be more than the predefined number and reduces it to be the predefined number.

If the relative velocity between the ego vehicle and the object exceeds the velocity threshold, the close-range extension counter may be computed based on the object age measured in frames, and distance between the object and the ego vehicle, and further based on the relative velocity between the ego vehicle and the object, and further based on the frame rate. For example, the close-range extension counter may be computed as follows:

$$\text{Close range extension counter } = \frac{\text{object age } \times \text{distance between object and ego vehicle} \times \text{frame rate}}{\text{relative velocity between ego vehicle and object}}.$$

In other words, the close-range extension counter may be computed based on the number of frames that can be covered in one second, considering that both the ego vehicle and the object are moving. For example, the velocity threshold may be 0.001 m/sec.

Next, in 64, the tracking extension module 114 may set an Extend_prediction flag to ON, and may decrease a parameter PoE_decrease to a value lower than the default value, for example, 0.01. PoE_decrease is also referred herein as the "probability decremental value". The Extend_prediction flag being set to ON indicates that the extend-prediction mode is turned on, and therefore the object may continue to be tracked for an extend-prediction time limit, even if it is not detected by the detection module. The PoE_decrease may be set to a small value so that the PoE does not decrease abruptly such that the tracking device 100 may continue to track the object for a longer time.

If in 610, the close-range module 118 determines that the object is not in close range, the method may proceed to 616. In 616, the Extend_prediction flag may be set to OFF, while the PoE_decrease value may be set to the default value, for example, 0.2.

Next, the method proceeds to "A" 620 which leads to 622 of FIG. 6B.

Referring to FIG. 6B, in 622, the tracking extension module 114 may determine if PoE_delta as defined in 604, exceeds PoE_decrease computed in 614 or 616. If PoE_delta is larger than PoE_decrease, a new PoE value denoted as PoE_new is set as the difference between PoE_old and PoE_decrease, in 624. The new PoE value may also be referred herein as the "adjusted PoE". In other words, PoE_new = PoE_old - PoE_decrease. Otherwise, if PoE_delta is equal to, or less than PoE_decrease, the tracking extension module 114 may define PoE_new as being equal to PoE_curr, in 626.

Next, in 628, the tracking extension module 114 may determine if the Extend_prediction flag is ON. If the Extend_prediction flag is ON, the tracking extension module 114 may increment the prediction extension maximum age, in 632. The prediction extension maximum age is a cap put on the maximum age of the object, for the extend-prediction mode. It is a safety interval during which the prediction extension is active. The prediction extension maximum age may be initialized based on the object's age, i.e., the time duration during which the object is detected, added to a computed number of frames. The computed number of frames may be a factor multiplied by the number of frames that the object is being tracked under the extend-prediction mode. The factor may be, for example, 0.5. The computed number of frames may be limited to a range of, for example, 3 to 10. When the factor multiplied by the number of frames that the object is being tracked under the extend-prediction mode falls below the lower limit of the range, for example, 2, the computed number of frames may be adjusted to the value of the lower limit, for example, 3. Also, when the factor multiplied by the number of frames that the object is being tracked under the extend-prediction mode exceeds the upper limit of the range, for example, 11, the computed number of frames may be adjusted to the value of the upper limit, for example, 10.

Next, the tracking extension module 114 may proceed to output PoE_new as the final PoE for the current frame, in 638. In other words, the adjusted PoE of the current frame = PoE_new. The adjusted PoE of the current frame may be the output of the methods 500 and 600.

Otherwise, if the Extend_prediction flag is OFF, the tracking extension module 114 may determine if the target age is larger than the prediction extension maximum age, in 634. If the target age is larger than the prediction extension maximum age, the tracking extension module 114 may reset the PoE extension information in 636, before proceeding to output the final PoE of the current frame in 638. In other words, if the target age is larger than the prediction extension maximum age, the tracking extension module 114 may terminate the extend-prediction mode. The target age may become larger than the prediction extension maximum age, for example, when the object is so close to the ego vehicle such that the close-range module 118 fails to confirm the fulfilment of the close-range conditions, and as such, the ExtendPrediction flag is OFF and the prediction extension maximum age is no longer incremented. In such a scenario, the target age increases until the target age is larger than the prediction extension maximum age. The tracking extension module 114 may then rapidly reduce the PoE, for example, by deducting 0.2 off the PoE value to terminate the extend-prediction mode.

The PoE extension information that is reset in 636 may include data used to handle PoE extension, including (a) the number of frames where the prediction has been extended, (b) the prediction extension maximum age, (c) fulfilment of close-range criteria, and (d) the close-range extension counter.

The methods 500 and 600 described above may provide several advantages.

The training process of classification neural networks for close-range is typically costly and resource-intensive. By improving the accuracy of PoE determination, the methods 500 and 600 may lower the cost of the training required for the classification neural networks for close-range detection.

Also, the method 500 or 600 may prevent close-range collisions by tracking the targets at close range. When any one of the methods 500, 600 determine that a collision between the ego vehicle and the tracked target is imminent, the ego vehicle may activate its emergency brake assist to prevent the collision.

Further, the method 500 or 600 may assist in determining whether the target is travelling towards or away from the ego vehicle, since the target may continue to be tracked at close range. This in turn, may be useful information for determining whether the target should continue to be tracked.

The methods 500 and 600 may be applied to any camera-based tracking application. These methods 500, 600 may further assist in detecting road conditions, based on changes in the kinematics of the object being tracked. These methods 500, 600 may be used to improve the continuity of tracking when targets enter a tunnel such that the sensors on the ego vehicle temporarily fail to detect the targets.

The following examples described further technical aspects of the devices, systems and methods described above and shall not be interpreted as claims.

The following examples can additionally be combined with any of the devices, systems and methods as described above, any of the claims as originally filed.

Example 1 is a computer-implemented method for tracking an object, the method including: receiving a real-time video feed; for each frame of the video feed: determining a PoE of the object in the frame; determining whether a PoE of the object in the frame falls below a probability threshold; determining whether the object fulfils a set of close-range criteria, based on determining that the PoE is lower than the probability threshold; and generating a adjusted PoE based on the determination of whether the object fulfils the set of close-range criteria.

In example 2, the subject-matter of example 1 can optionally include that generating the adjusted PoE is further based on a difference between the adjusted probability of a preceding frame and the PoE of the object in the frame.

In example 3, the subject-matter of any one of examples 1 to 2 can optionally include: determining a probability decremental value based on the determination of whether the object fulfils the set of close-range criteria.

In example 4, the subject-matter of example 3 can optionally include that determining the probability decremental value includes assigning a first value to the probability decremental value based on determining that the object fulfils the set of close-range criteria, and further includes assigning a second value to the probability decremental value based on determining that the object does not fulfil the set of close-range criteria, wherein the first value is smaller than the second value.

In example 5, the subject-matter of any one of examples 3 to 4 can optionally include: determining whether a difference between the adjusted probability of a preceding frame and the PoE of the object in the frame exceeds the probability decremental value.

In example 6, the subject-matter of example 5 can optionally include that generating the adjusted PoE includes deducting the decremental value from the adjusted probability of a preceding frame, based on determining that the difference exceeds the probability decremental value.

In example 7, the subject-matter of any one of examples 5 to 6 can optionally include that generating the adjusted PoE includes setting the PoE of the object in the frame as the adjusted PoE, based on determining that the difference does not exceed the probability decremental value.

In example 8, the subject-matter of any one of examples 1 to 7 can optionally include: turning on an extend-prediction flag, based on determining that the object fulfils the set of close-range criteria; and incrementing an extend-prediction time limit.

In example 9, the subject-matter of example 8 can optionally include: determining whether an age of the object in the video feed exceeds the extend-prediction time limit; and resetting the extend-prediction time limit based on determining that the age of the object in the video feed exceeds the extend-prediction time limit.

In example 10, the subject-matter of any one of examples 1 to 9 can optionally include: setting a close-range extension counter based on a time-to-collision between the object and the vehicle, based on determining that the object fulfils the set of close-range criteria.

In example 11, the subject-matter of example 10 can optionally include: decrementing the close-range extension counter, based on determining that the PoE is lower than the probability threshold.

In example 12, the subject-matter of any one of examples 10 to 11 can optionally include: determining whether the object fulfils the set of close-range criteria, further based on determining that the close-range extension counter of a preceding frame is more than zero.

Example 13 is a non-transitory computer-readable storage medium including instructions, which when executed by a processor, performs the computer-implemented method of any one of examples 1 to 12.

Example 14 is a device for tracking an object, the device including: the non-transitory computer-readable storage medium of example 13; and at least one processor coupled to the non-transitory computer-readable storage medium, wherein the at least one processor is configured to carry out the computer-implemented method of any one of examples 1 to 12.

Example 15 is a system for tracking an object, the system including: the device of example 14; and a camera configured to capture the video feed.

In example 16, the subject-matter of any one of examples 1 to 12 can optionally include: recognizing the object in the frame; and determining a confidence of the recognition.

In example 17, the subject-matter of example 16 can optionally include: determining the PoE of the object in the frame based on the confidence of recognition, and further based on a number of frames in which the object is detected.

In example 18, the subject-matter of any one of examples 1 to 12 and 16 can optionally include: setting the determined PoE of the object in the frame as the adjusted PoE, based on determining that the determined PoE of the object in the frame is not lower than the probability threshold.

In example 19, the subject-matter of example 10 can optionally include: determining the time-to-collision based on relative velocity between the object and the vehicle, and distance between the object and the vehicle.

While embodiments of the invention have been particularly shown and described with reference to specific embodiments, it should be understood by those skilled in the art that various changes in form and detail may be made therein without departing from the scope of the invention as defined by the appended claims. The scope of the invention is thus indicated by the appended claims. It will be appreciated that common numerals, used in the relevant drawings, refer to components that serve a similar or the same purpose.

It will be appreciated to a person skilled in the art that the terminology used herein is for the purpose of describing various embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It is understood that the specific order or hierarchy of blocks in the processes / flowcharts disclosed is an illustration of exemplary approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C.

**Claims**

1. A computer-implemented method (500) for tracking an object, the method (500) comprising:

   receiving a real-time video feed (502);
   for each frame of the video feed:

   determining a probability of existence of the object in the frame (504);
   determining whether a probability of existence of the object in the frame falls below a probability threshold (506);
   determining whether the object fulfils a set of close-range criteria, based on determining that the probability of existence is lower than the probability threshold (508); and
   generating an adjusted probability of existence based on the determination of whether the object fulfils the set of close-range criteria (510).

2. The computer-implemented method (500) of claim 1, wherein generating the adjusted probability of existence (510) is further based on a difference between the adjusted probability of existence of the object in a preceding frame and the probability of existence of the object in the frame.

3. The computer-implemented method (500) of any one of claims 1 to 2, further comprising:
   determining a probability decremental value based on the determination of whether the object fulfils the set of close-range criteria.

4. The computer-implemented method (500) of claim 3, wherein determining the probability decremental value comprises assigning a first value to the probability decremental value based on determining that the object fulfils the set of close-range criteria, and further comprises assigning a second value to the probability decremental value based on determining that the object does not fulfil the set of close-range criteria, wherein the first value is smaller than the second value.

5. The computer-implemented method (500) of any one of claims 3 to 4, further comprising:
   determining whether a difference between the adjusted probability of existence of a preceding frame and the probability of existence of the object in the frame exceeds the probability decremental value.

6. The computer-implemented method (500) of claim 5, wherein generating the adjusted probability of existence comprises deducting the decremental value from the adjusted probability of the preceding frame, based on determining that the difference exceeds the probability decremental value.

7. The computer-implemented method (500) of any one of claims 5 to 6, wherein generating the adjusted probability of existence comprises setting the probability of existence of the object in the frame as the adjusted probability of existence, based on determining that the difference does not exceed the probability decremental value.

8. The computer-implemented method (500) of any one of claims 1 to 7, further comprising:

   turning on an extend-prediction flag, based on determining that the object fulfils the set of close-range criteria; and incrementing an extend-prediction time limit.

9. The computer-implemented method (500) of claim 8, further comprising:

   determining whether an age of the object in the video feed exceeds the extend-prediction time limit; and resetting the extend-prediction time limit based on determining that the age of the object in the video feed exceeds the extend-prediction time limit.

10. The computer-implemented method (500) of any one of claims 1 to 9, further comprising:
    setting a close-range extension counter based on a time-to-collision between the object and a vehicle, based on determining that the object fulfils the set of close-range criteria.

11. The computer-implemented method (500) of claim 10, further comprising:
    decrementing the close-range extension counter, based on determining that the probability of existence is lower than the probability threshold.

12. The computer-implemented method (500) of any one of claims 10 to 11, further comprising:
    determining whether the object fulfils the set of close-range criteria, further based on determining that the close-range extension counter of a preceding frame is more than zero.

13. A non-transitory computer-readable storage medium (102) comprising instructions, which when executed by a processor, performs the computer-implemented method (500) of any one of claims 1 to 12.

14. A device (100) for tracking an object, the device (100) comprising:

    the non-transitory computer-readable storage medium (102) of claim 13; and
    at least one processor (104) coupled to the non-transitory computer-readable storage medium (302), wherein the at least one processor (104) is configured to carry out the computer-implemented method (500) of any one of claims 1 to 12.

15. A system (200) for tracking an object, the system (200) comprising:

    the device (100) of claim 14; and
    a camera (306) configured to capture the video feed.

**Patentansprüche**

1. Computerimplementiertes Verfahren (500) zum Verfolgen eines Objekts, wobei das Verfahren (500) aufweist:

   Empfangen eines Echtzeitvideofeeds (502);
   für jedes Einzelbild des Videofeeds:

      Ermitteln einer Wahrscheinlichkeit eines Vorhandenseins des Objekts in dem Einzelbild (504);
      Ermitteln, ob eine Wahrscheinlichkeit eines Vorhandenseins des Objekts in dem Einzelbild unter einem Wahrscheinlichkeitsschwellenwert liegt (506);
Ermitteln, basierend auf dem Ermitteln, dass die Wahrscheinlichkeit des Vorhandenseins niedriger als der Wahrscheinlichkeitsschwellenwert ist, ob das Objekt einen Satz von Nahbereichskriterien erfüllt (508); und Erzeugen einer angepassten Wahrscheinlichkeit des Vorhandenseins basierend auf dem Ermitteln, ob das Objekt den Satz von Nahbereichskriterien erfüllt (510).

2. Computerimplementiertes Verfahren (500) nach Anspruch 1, wobei das Erzeugen der angepassten Wahrscheinlichkeit des Vorhandenseins (510) ferner basiert ist auf einem Unterschied zwischen der angepassten Wahrscheinlichkeit des Vorhandenseins des Objekts in einem vorhergehenden Einzelbild und der Wahrscheinlichkeit des Vorhandenseins des Objekts in dem Einzelbild.

3. Computerimplementiertes Verfahren (500) nach einem der Ansprüche 1 bis 2, das ferner aufweist:
Ermitteln eines abnehmenden Wahrscheinlichkeitswerts basierend auf dem Ermitteln, ob das Objekt den Satz von Nahbereichskriterien erfüllt.

4. Computerimplementiertes Verfahren (500) nach Anspruch 3, wobei das Ermitteln des abnehmenden Wahrscheinlichkeitswerts ein Zuweisen eines ersten Werts zu dem abnehmenden Wahrscheinlichkeitswert basierend auf dem Ermitteln, dass das Objekt den Satz von Nahbereichskriterien erfüllt, aufweist und ferner ein Zuweisen eines zweiten Werts zu dem abnehmenden Wahrscheinlichkeitswert basierend auf dem Ermitteln, dass das Objekt den Satz von Nahbereichskriterien nicht erfüllt, aufweist, wobei der erste Wert kleiner als der zweite Wert ist.

5. Computerimplementiertes Verfahren (500) nach einem der Ansprüche 3 bis 4, das ferner aufweist:
Ermitteln, ob ein Unterschied zwischen der angepassten Wahrscheinlichkeit des Vorhandenseins in einem vorhergehenden Einzelbild und der Wahrscheinlichkeit des Vorhandenseins des Objekts in dem Einzelbild den abnehmenden Wahrscheinlichkeitswert überschreitet.

6. Computerimplementiertes Verfahren (500) nach Anspruch 5, wobei das Erzeugen der angepassten Wahrscheinlichkeit des Vorhandenseins ein Abziehen des abnehmenden Werts von der angepassten Wahrscheinlichkeit des vorhergehenden Einzelbildes basierend darauf aufweist, dass der Unterschied den abnehmenden Wahrscheinlichkeitswert überschreitet.

7. Computerimplementiertes Verfahren (500) nach einem der Ansprüche 5 bis 6, wobei das Erzeugen der angepassten Wahrscheinlichkeit des Vorhandenseins ein Einstellen der Wahrscheinlichkeit des Vorhandenseins des Objekts in dem Einzelbild als die angepasste Wahrscheinlichkeit des Vorhandenseins basierend darauf aufweist, dass der Unterschied den abnehmenden Wahrscheinlichkeitswert nicht überschreitet.

8. Computerimplementiertes Verfahren (500) nach einem der Ansprüche 1 bis 7, das ferner aufweist:

Einschalten eines Flags einer erweiterten Vorhersage basierend auf dem Ermitteln, dass das Objekt den Satz von Nahbereichskriterien erfüllt; und
Hochzählen einer Zeitbegrenzung für die erweiterte Vorhersage.

9. Computerimplementiertes Verfahren (500) nach Anspruch 8, das ferner aufweist:

Ermitteln, ob ein Alter des Objekts in dem Videofeed die Zeitbegrenzung für die erweiterte Vorhersage überschreitet; und
Zurücksetzen der Zeitbegrenzung für die erweiterte Vorhersage basierend auf dem Ermitteln, dass das Alter des Objekts in dem Videofeed die Zeitbegrenzung für die erweiterte Vorhersage überschreitet.

10. Computerimplementiertes Verfahren (500) nach einem der Ansprüche 1 bis 9, das ferner aufweist:
Einstellen eines Zählers einer Nahbereichserweiterung basierend auf einer Zeitbis-zur-Kollision zwischen dem Objekt und einem Fahrzeug, basierend auf dem Ermitteln, dass das Objekt den Satz von Nahbereichskriterien erfüllt.

11. Computerimplementiertes Verfahren (500) nach Anspruch 10, das ferner aufweist:
Herabzählen des Zählers der Nahbereichserweiterung basierend auf dem Ermitteln, dass die Wahrscheinlichkeit des Vorhandenseins niedriger als der Wahrscheinlichkeitsschwellenwert ist.

12. Computerimplementiertes Verfahren (500) nach einem der Ansprüche 10 bis 11, das ferner aufweist:

Ermitteln, ob das Objekt den Satz von Nahbereichskriterien erfüllt, was ferner auf einem Ermitteln basiert ist, dass der Zähler der Nahbereichserweiterung eines vorhergehenden Einzelbildes größer als Null ist.

**13.** Nichtflüchtiges computerlesbares Speichermedium (102), das Anweisungen aufweist, die, wenn sie von einem Prozessor ausgeführt werden, das computerimplementierte Verfahren (500) nach einem der Ansprüche 1 bis 12 durchführen.

**14.** Vorrichtung (100) zum Verfolgen eines Objekts, wobei die Vorrichtung (100) aufweist:

das nichtflüchtige computerlesbare Speichermedium (102) nach Anspruch 13; und
mindestens einen Prozessor (104), der mit dem nichtflüchtigen computerlesbaren Speichermedium (302) gekoppelt ist, wobei der mindestens eine Prozessor (104) ausgebildet ist zum Ausführen des computerimplementierten Verfahrens (500) nach einem der Ansprüche 1 bis 12.

**15.** System (200) zum Verfolgen eines Objekts, wobei das System (200) aufweist:

die Vorrichtung (100) nach Anspruch 14; und
eine Kamera (306), die ausgebildet ist zum Aufnehmen des Videofeeds.

## Revendications

**1.** Procédé (500) mis en œuvre par ordinateur pour suivre un objet, le procédé (500) comportant les étapes consistant à :

recevoir un flux vidéo en temps réel (502) ;
pour chaque trame du flux vidéo :

déterminer une probabilité d'existence de l'objet dans la trame (504) ;
déterminer si une probabilité d'existence de l'objet dans la trame tombe au-dessous d'un seuil de probabilité (506) ;
déterminer si l'objet satisfait un ensemble de critères de courte portée, sur la base de la détermination du fait que la probabilité d'existence est inférieure au seuil de probabilité (508) ; et
générer une probabilité ajustée d'existence sur la base de la détermination selon laquelle l'objet satisfait ou non l'ensemble de critères de courte portée (510).

**2.** Procédé (500) mis en œuvre par ordinateur selon la revendication 1, la génération de la probabilité ajustée d'existence (510) étant en outre basée sur une différence entre la probabilité ajustée d'existence de l'objet dans une trame précédente et la probabilité d'existence de l'objet dans la trame.

**3.** Procédé (500) mis en œuvre par ordinateur selon l'une quelconque des revendications 1 à 2, comportant en outre :
la détermination d'une valeur de décrément de probabilité sur la base de la détermination selon laquelle l'objet satisfait ou non l'ensemble de critères de courte portée.

**4.** Procédé (500) mis en œuvre par ordinateur selon la revendication 3, la détermination de la valeur de décrément de probabilité comportant l'affectation d'une première valeur à la valeur de décrément de probabilité sur la base de la détermination du fait que l'objet satisfait l'ensemble de critères de courte portée, et comportant en outre l'affectation d'une seconde valeur à la valeur de décrément de probabilité sur la base de la détermination du fait que l'objet ne satisfait pas l'ensemble de critères de courte portée, la première valeur étant plus petite que la seconde valeur.

**5.** Procédé (500) mis en œuvre par ordinateur selon l'une quelconque des revendications 3 à 4, comportant en outre :
le fait de déterminer si une différence entre la probabilité ajustée d'existence d'une trame précédente et la probabilité d'existence de l'objet dans la trame dépasse la valeur de décrément de probabilité.

**6.** Procédé (500) mis en œuvre par ordinateur selon la revendication 5, la génération de la probabilité ajustée d'existence comportant le fait de déduire la valeur de décrément de la probabilité ajustée de la trame précédente, sur la base de la détermination du fait que la différence dépasse la valeur de décrément de probabilité.

**7.** Procédé (500) mis en œuvre par ordinateur selon l'une quelconque des revendications 5 à 6, la génération de la probabilité ajustée d'existence comportant la spécification de la probabilité d'existence de l'objet dans la trame comme étant la probabilité ajustée d'existence, sur la base de la détermination du fait que la différence ne dépasse pas la valeur de décrément de probabilité.

8. Procédé (500) mis en œuvre par ordinateur selon l'une quelconque des revendications 1 à 7, comportant en outre :

l'activation d'un fanion de prolongation de prédiction, sur la base de la détermination du fait que l'objet satisfait l'ensemble de critères de courte portée ; et
l'incrémentation d'une limite de temps de prolongation de prédiction.

9. Procédé (500) mis en œuvre par ordinateur selon la revendication 8, comportant en outre :

le fait de déterminer si un âge de l'objet dans le flux vidéo dépasse la limite de temps de prolongation de prédiction ; et
la réinitialisation de la limite de temps de prolongation de prédiction sur la base de la détermination du fait que l'âge de l'objet dans le flux vidéo dépasse la limite de temps de prolongation de prédiction .

10. Procédé (500) mis en œuvre par ordinateur selon l'une quelconque des revendications 1 à 9, comportant en outre :
le réglage d'un compteur de prolongation de courte portée d'après un temps jusqu'à la collision entre l'objet et un véhicule, sur la base de la détermination du fait que l'objet satisfait l'ensemble de critères de courte portée.

11. Procédé (500) mis en œuvre par ordinateur selon la revendication 10, comportant en outre :
le fait de décrémenter le compteur de prolongation de courte portée, sur la base de la détermination du fait que la probabilité d'existence est inférieure au seuil de probabilité.

12. Procédé (500) mis en œuvre par ordinateur selon l'une quelconque des revendications 10 à 11, comportant en outre :
le fait de déterminer si l'objet satisfait l'ensemble de critères de courte portée, en se basant en outre sur la détermination du fait que le compteur de prolongation de courte portée d'une trame précédente est supérieur à zéro.

13. Support (102) de stockage non transitoire lisible par ordinateur comportant des instructions qui, lorsqu'elles sont exécutées par un processeur, réalise le procédé (500) mis en œuvre par ordinateur selon l'une quelconque des revendications 1 à 12.

14. Dispositif (100) de suivi d'un objet, le dispositif (100) comportant :

le support (102) de stockage non transitoire lisible par ordinateur selon la revendication 13 ; et
au moins un processeur (104) couplé au support (302) de stockage non transitoire lisible par ordinateur, le ou les processeurs (104) étant configurés pour réaliser le procédé (500) mis en œuvre par ordinateur selon l'une quelconque des revendications 1 à 12.

15. Système (200) de suivi d'un objet, le système (200) comportant :

le dispositif (100) selon la revendication 14 ; et
une caméra (306) configurée pour capturer le flux vidéo.

FIG. 1

FIG. 2

FIG. 3

400A

404

402

FIG. 4A

400B

FIG. 4B

500

| 502 | Receive a real-time video feed |

For each frame of the video feed:

| 504 | Determine a probability of existence (PoE) of the object in the frame |

| 506 | Determine whether the PoE of the object in the frame falls below a probability threshold |

| 508 | Determine whether the object fulfils a set of close-range criteria, based on determining that the PoE is lower than the probability threshold |

| 510 | Generate a new PoE based on the determination of whether the object fulfils the set of close-range criteria |

FIG. 5

_600_

602 Start

604

PoE_old = PoE for last frame
PoE_curr = PoE based on Associated
Measurements x PoE based on LifeCycle
PoE_delta=PoE_old – PoE_curr

606

Close Range
Extension Counter > 0
AND
PoE_curr < $P_T$

NO

638 of
FIG. 6B

YES

608

Decrement Close Range Extension Counter

610

Check for
close range

NO                                    YES

612

Calculate Close
Range Extension
Counter

616

ExtendPrediction
FLAG = OFF
PoE_decrease by 0.2

ExtendPrediction
flag = ON
PoE_decrease =
0.01

620

A

614

FIG. 6A

FIG. 6B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KANEKO** ; **NAKAYAMA**. A vehicle image tracking method robust to size reduction and partial color change. *2018 INTERNATIONAL WORKSHOP ON ADVANCED IMAGE TECHNOLOGY (IWAIT)*, 07 January 2018